# EUROPEAN PATENT APPLICATION

(11) **EP 2 180 666 A1**
(43) Date of publication of application: **28.04.2010**
(21) Application number: 08841354.7
(22) Date of filing: 08.10.2008
(51) Int. Cl.: H04M 1/00, G06F 3/14, H04M 1/247

(54) **MOBILE TERMINAL DEVICE AND EVENT NOTIFICATION METHOD THEREOF**

(30) Priority: 24.10.2007 JP 2007275936
(71) Applicant: Nec Corporation, Tokyo 108-8001 (JP)
(72) Inventor: IKEDA, Toshiharu, Tokyo 108-8001 (JP)
(74) Representative: Glawe, Delfs, Moll
(86) International application number: PCT/JP2008/068306
(87) International publication number: WO 2009/054269

(57) **Abstract**

A portable terminal device and a method for informing of event thereof, which efficiently inform a user of events, such as incoming calls, a timer, and the like, without disturbing a user's operation, are provided. Therefore, a simplified event informing mode in which an outline of the event is briefly displayed on an icon area of a display unit for a predetermined time period and is informed, and a detailed event information mode in which a sensor 18 detects form change made by the user, and details of the event are displayed, are disclosed. The user can optionally and readily choose one of simplified event information and detailed event information.

## Description

### TECHNICAL FIELD

The present invention relates to a portable terminal device and a method for informing of event thereof and in particular, to the portable terminal device having a communicating function, such as a cellular phone, and the method for informing of event in the portable terminal device which informs a user of an event, which occurs during operations thereof, by displaying the event on a display unit.

### BACKGROUND ART

The portable terminal device, such as the cellular phone or the portable information terminal becomes popular as a portable information transmitting and receiving means. The portable terminal device conducts wireless communication with another portable terminal device through a plurality of base stations each having a relatively small service area, and enables two-way communication with another portable terminal device or a fixed communication device.

The portable terminal device allows reception of digital terrestrial television (TV) broadcasting, playing of music data obtained via a network, and many other applications, besides use as communication means. Therefore, the portable terminal device may need to inform a user of incoming telephone calls, output of set alarm, incoming set time of an alarm timer, information on specific events from a scheduler, or the like (hereinafter generally refer to as event), during operation of the portable terminal device, for example, during receiving the TV broadcasting with the portable terminal device.

The event information is very important for a user of the portable terminal device and should not be ignored and disregarded. However, it is not preferable that event information is displayed on a display screen at important or exciting (climactic) scenes of TV images, for example, because the operation is interrupted. Therefore, related technologies eliminating inconvenience of a user's operation and informing the user of necessary events are disclosed in some technical literatures (e.g. refer to patent document 1).

The patent document 1 discloses an information terminal device having an antenna for receiving digital terrestrial TV broadcasting and a tuner unit to display received TV images on a display panel.
The information terminal device displays an envelope-shaped icon or a cellular-phone-shaped icon on the display screen and informs a user of an incoming telephone call or e-mail reception, when the incoming telephone call or the e-mail arrives while the user watches the TV images. Receiving information of the icons, the user may stop the operation to instantly respond the call or may open the e-mail at an appropriate time thereafter. If a display unit of the information terminal device lies longitudinally, the display screen may be divided into upper and lower halves, one of which may display the TV images, while the other may display details of the event by using characters.
Patent citation 1: Japanese Patent Application Laid-Open No. 2007-142762 (pp. 5-7, FIG. 1)

### DISCOSURE OF INVENTION

### TECHNICAL PROBLEM

The related technology described above includes some problems. If the event information is displayed on the display screen, the user's operation (e.g. TV watching) is interrupted. Important information, therefore, may be lost. Even if the operation is not interrupted, the icons displayed on the display screen disturb or interfere with the images displayed thereon.

The present invention is provided in view of the problems of the related technology aforementioned. It is, therefore, an object of the present invention to provide the portable terminal device and the method of displaying an event thereof for resolving or reducing the problems.

### TECHNICAL SOLUTION

A portable terminal device of the present invention employs the following characteristic configurations. That is,
(1) the portable terminal device informs a user of event information by displaying the event information on a display screen of a display unit, when an event to be informed occurs during a user's operation. The device includes event display means for displaying the event information on a selected area where the user's operation is not disturbed, of the display screen of the display unit.

Further, another portable terminal device of the present invention employs the following characteristic configurations. That is,
(6) the portable terminal device informs a user of event information by displaying the event information on a display screen of a display unit, when an event to be informed occurs during a user's operation. The portable terminal device includes,
display means for displaying an outline of the event in a simplified event informing mode on a selected area of the display screen where the operation on the display unit is not disturbed, and
display means for displaying details of the event in a detailed event informing mode, when form change of the portable terminal device is detected while the event information is displayed in the simplified event informing mode.

Further, a method of displaying events of the portable terminal device of the present invention employs the following characteristic configurations. That is,
(9) the method of displaying events in the portable terminal device that informs a user of event information by displaying the event information on a display screen of a display unit, when an event to be informed occurs during a user's operation. The method includes,
   a display area selecting step of preliminarily selecting a display area in a display screen, where the operation is not disturbed, of the display unit for displaying the event information,
   a simplified event informing step of displaying the event information on the selected display area in a simplified event informing mode, when the event occurs,
   a form change detecting step of detecting form change of the portable terminal device while the event information is displayed in the simplified event informing mode, and
   a displaying mode changing step of changing to a detailed event informing mode for informing of details of the event, when the form change of the portable terminal device is detected in the form change detecting step.

### ADVANTAGEOUS EFFECTS

According to the portable terminal device and the method for informing of event thereof of the present invention, practical specific effects described below are obtained. First, an event can be readily informed without disturbing a user's operation. Second, simplified event information can be obviously displayed on an icon area or the like by using characters or icons. Third, a relatively long message may be displayed on a limited area (space), since the event is scroll-displayed when the simplified event information is displayed. Fourth, a next event may be informed after a display time period elapses since the display time period of the simplified event information is set, and a user may optionally set the display time period, if needed. Fifth, the user may easily set one of a simplified event displaying mode and a detailed event displaying mode by changing a form of a chassis.

### BEST MODE FOR CARRING OUT THE INVENTION

Referring to attached drawings, a configuration and an operation of a preferred embodiment of the portable terminal device and the method for informing an event thereof of the present invention, are explained in detail.

FIG. is a block diagram illustrating the configuration of the preferred embodiment of the portable terminal device of the present invention. A portable terminal device 10 includes a CPU (central processing unit) 12, as control means, a communication unit 14, a display unit 16, and a sensor (hinge unit sensor) 18. Each of the communication unit 14, the display unit 16, and the sensor 18 connects with the CPU 12, and is configured to operate under the control thereof.

The communication unit 14 includes an antenna (not shown), and performs wireless communication with a communication device such as another portable terminal device, a fixed telephone terminal, a PC (personal computer), or the like, through a base station (not shown). The display unit 16, which is an interface to a user, is, for example, a liquid crystal display panel having a rectangular-shaped display screen. The display unit 16 is configured so that image information such as TV images or character information received through the communication unit 14 is able to be displayed. As mentioned below, the sensor 18 detects form change (opening and closing states) of the portable terminal device 10, and informs the CPU 12 of the detected result. The CPU 12 controls an operation of each unit. The portable terminal device 10 includes an input device such as a keyboard, a transmitter/ receiver for input/output of voice information and the like as well as a common portable terminal device, descriptions of which are omitted, having no direct relation to the embodiment.

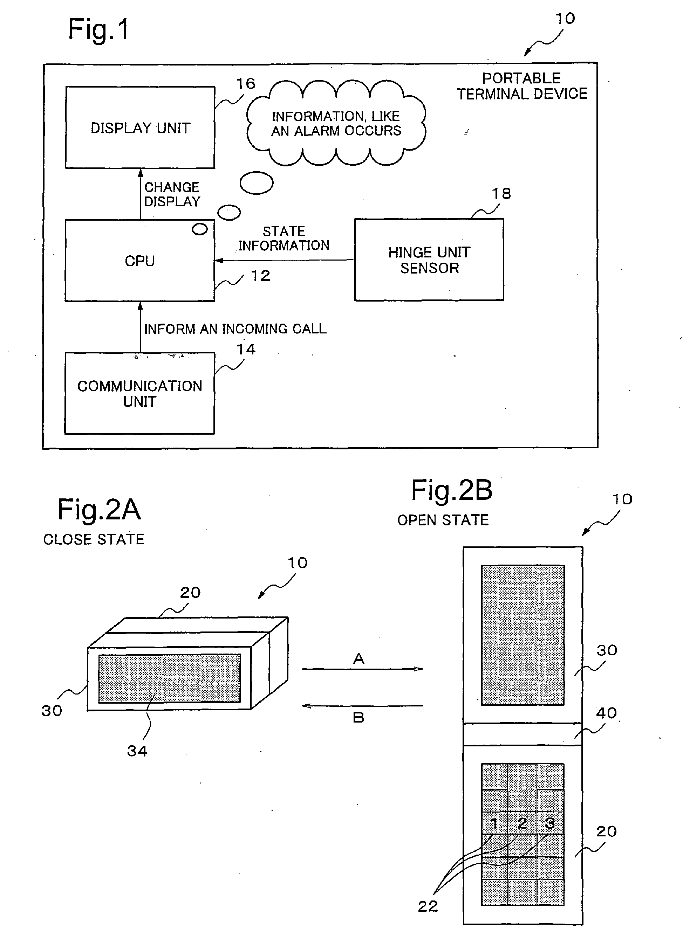

The whole operations of the portable terminal device 10 shown in FIG.1 are described. When an incoming call from an outside communication device (not shown) arrives at the communication unit 14 of the portable terminal device 10, or when other events occur, that effect is displayed in the display unit 16 under the control of the CPU 12 in order to visually inform a user. The portable terminal device 10 of the embodiment is characterized in including informing means for informing the user of a telephone call, e-mail arrival, an alarm, or the like so as not to disturb an ongoing operation, and starting means for automatically starting a currently informed function if the user changes a form of the portable terminal device 10 during informing by the informing means.

In the portable terminal device 10 shown in FIG.1, an event to be informed with a display of an alarm from the communication unit 14 or the CPU 12 may occur while the user operates one application. The alarm means a generic name of an alarm clock, a timer, or the like for informing at the specific time, and a scheduler for informing a schedule of the specific day. When the event occurs, contents of the event information (hereinafter refered to as event display) are displayed on a selected display area, where the operation of the application is not disturbed, on the display screen of the display unit 16.

Here, the event display on the display unit 16 disappears in a predetermined time period in order to enable next (i.e. succeeding) new event to be displayed. As described below, if the user performs an action to change form of a chassis of the portable terminal device 10 while the event is displayed, an application related to the event display starts to display details of the event. Suppose, for example, that the event display occurs while the user watches the display screen on the display unit 16 of the portable terminal device 10, a chassis of which is formed so that the keyboard is unavailable. If the user enables the keyboard to be available by changing the form of the chassis while the event is displayed on the display screen of the display unit 16, the application for displaying details of the event starts, and the event is displayed in a detailed displaying mode.

As mentioned above, in the portable terminal device and the method for informing of an event thereof of the embodiment, means for informing the event and the function related to the informed event may automatically start, smooth transition of operations becomes possible. Specific operations of the embodiment of the invention are described below in detail.

The communication unit 14 for performing communication, the CPU 12 for conducting information processing and various controls, and the display unit 16 for displaying information in the portable terminal device 10 shown in FIG. are well-known in a person having ordinary skill in the art. Therefore, detailed descriptions of these units are omitted. The hinge unit sensor (sensor) 18 monitors the form of the portable terminal device 10, that is, a state of a connecting part between the keyboard (not shown) and the display unit 16.

In the portable terminal device 10, as shown in FIG.2, a first part 20 including a keyboard unit 22 connects, via a hinge unit 40, to a second part 30 including a display unit 32 in an openable and closable manner. If these two parts 20 and 30 are folded via the hinge unit 40, the portable terminal device 10 goes into a closed state (a first state) shown in FIG.2 (A). If these two parts 20 and 30 are opened via the hinge unit 40, the portable terminal device 10 goes into an open state (a second state) shown in FIG.2 (B). The form of the portable terminal device 10 may lie either in the first state or in the second state according to user's operation of the hinge unit 40. In the first state shown in FIG.2 (A), the user may watch TV images with the portable terminal device 10, for example, by displaying the TV images on a display unit (display panel) 34 arranged on an outer surface of the second part 30. Further, in the second state of the portable terminal device 10, the user may enter a callee's telephone number to call the callee, or may enter a message to be sent by e-mail, by operating the keyboard unit 22. Form change of the portable terminal device 10 is not limited to the embodiment shown in FIG.2 (i.e. opening and closing in a vertical direction). Opening and closing in a lateral direction, lateral and longitudinal rotation, and other different form change are possible. The sensor 18 detects the above-mentioned form change (i.e. physical shape change) of the portable terminal device 10.

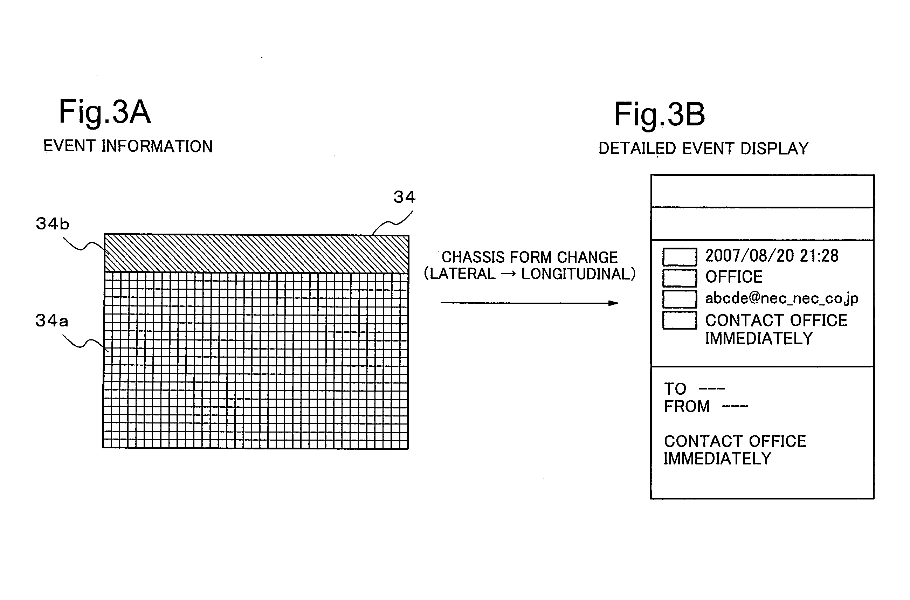

As mentioned above, the portable terminal device 10 may perform state change A in which the first state shown in FIG.2 (A) transfers into the second state shown in FIG.2 (B), and state change B in which the second state shown in FIG.2 (B) transfers into the first state shown in FIG.2 (A). The user may optionally choose the state change (state transition) A or B in the portable terminal device 10 as needed. FIG.3 illustrates examples of use of the portable terminal device 10 in the two states described above. FIG.3 (A) illustrates a specific example in which the TV images are displayed on a main area 34a of the display screen in the display unit 34 of the portable terminal device 10 and an event is informed on a margin area 34b thereof. When the event is informed in the state, a simply displayed message, such as "OFFICE", "CONTACT OFFICE IMMEDIATELY", or the like, is displayed on an area, for example, an icon display area arranged in a top part (or bottom part) of the display screen. In this case, if the displayed message is relatively longer than the display area, the displayed message may be, for example, scroll-displayed in one line. Therefore, arrival of the urgent message from the office is informed to the user of the portable terminal device 10, and the user may respond appropriately.

If the user changes the state of the portable terminal device 10 into the second state shown in FIG.2 (B) while the event information is displayed as shown in FIG.3 (A), that is, during an "event informing mode", the sensor 18 detects state change of the hinge unit 40, and transfers into a "detailed event displaying" mode shown in FIG.3 (B). That is, a chassis form of the portable terminal device 10 changes, and a direction of the display screen on the display unit changes from a lateral direction to a longitudinal direction. After that, details of the event, that is, an event occurring date, an office, a contact e-mail address, messages such as "CONTACT OFFICE IMMEDIATELY" or the like and related items of a caller, are displayed.

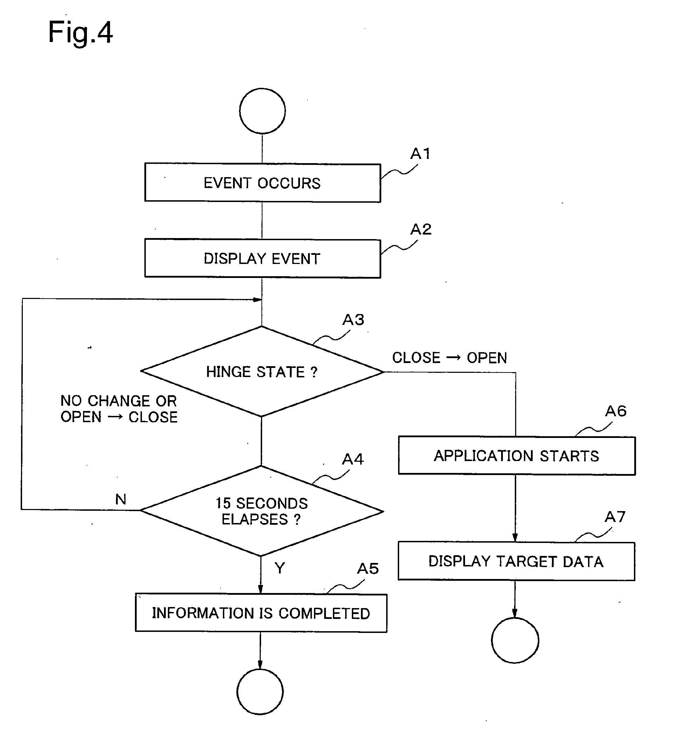

Referring to a flowchart shown in FIG.4, operations of the portable terminal device 10 or the method for informing of an event in the portable terminal device is described in more detail. In FIG.4, the CPU 12 detects occurrence of an event (step A1). Initially, event display, which is simplified information to a user related to the event, is displayed (step A2). The simplified information is displayed by scrolling contents of the event as mentioned above, as needed.
Since a display time period is fixed, number of characters of the event display for the simplified information is limited so as to be displayed within a predetermined time period.

Next, the user operates the hinge unit 40 of the portable terminal device 10 while the simplified information of the event is displayed. And, it is judged whether or not the state change occurs (step A3). In the embodiment, a subsequent process changes according to the state or the form change of the portable terminal device 10. Here, when the chassis of the portable terminal device 10 is shifted from the "close" state shown in FIG.2 (A) to the "open" state shown in FIG.2 (B), the simplified informing mode stops and an application for displaying detailed data of the event starts (step A6). Next, target detailed data of the event appear (step A7). In the other state, an elapsed time period is monitored (step A4). When a predetermined time period (e.g. 15 seconds) elapsing after the event is displayed, simplified event information disappears and the display in the simplified informing mode is completed (step A5). If the predetermined time period has not elapsed, the step A3 restarts and the elapsed time period is monitored again.

In the flowchart shown in FIG.4, in the step A3, when the portable terminal device 10 is shifted from the "close" state to the "open" state, the application starts (step A6). However, such operation is one example of operations of the device 10, and operations of the device 10 are not limited to the operation mentioned above. The form change of the portable terminal device 10 may include a change from "open" to "close", a change based on rotation, and the like, according to the chassis shape thereof. While in the step A4, the predetermined elapsing time period is monitored, another screen may be arranged in which a user can set an optional time period (elapsing time period).

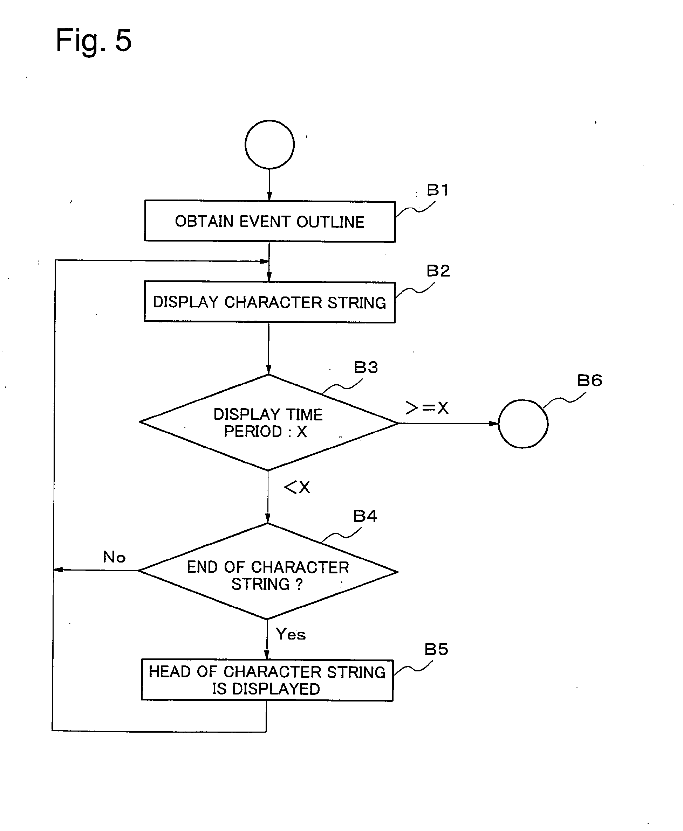

FIG.5 is a flowchart illustrating scroll-displaying in the simplified informing mode above mentioned above. Initially, an occurred event outline is obtained (step B1). A character string corresponding to the event outline is displayed (step B2). Next, it is judged whether or not a display time period runs out a predetermined time period "X" (step B3). When the display time period is equal to or longer than the "X", the display disappears and is completed (step B6). When the display time is less than "X", it is judged whether or not the end of the character string is displayed (step B4). If the end of the character string is displayed (Yes in step B4), the head of the character string is displayed again (step B5). If the end of the character string is not displayed (No in step B4), the step B2 starts again to display by scrolling the character string.

Another embodiment of the portable terminal device and the method for informing of event thereof of the invention is described. The embodiment includes means for enabling a user to change or optionally set an informing (or displaying) time period for an event, in simplified event displaying mode. According to the means, mail contents, for example, can be read if the displaying time period is increased. On the other hand, since information or display disappears soon if the displaying time period is decreased, offence to the user's eye can be reduced.

The embodiment, further, includes event selection means for selecting an event type.
The portable terminal device, for example, a cellular phone, has to inform of an incoming call. However, it becomes possible to select contents which a user is informed of by using the event selection means. The incoming call arrives through a voice call, a TV telephone call, an e-mail, or the like. The event may be, for example, an alarm clock or a scheduler informing of a specific time. Only information to be needed for a user can be selectively-informed by selecting the event. Further, display in the simplified informing mode may be formed by animation or an icon other than characters. In such case, rich expression may be possible.

The desirable embodiment of the portable terminal device and the method for informing of event thereof are described in detail. However, it is to be understood that such embodiments are only examples of the invention and do not limit the invention. A person ordinarily skilled in the art can easily understand that many types of variation or changes of the invention according to specific use are possible. For example, embodiments of the invention may be expressed as following descriptions in addition to the configurations (1), (6) and (9).
(2) The portable terminal device (1) includes measurement means for measuring a displaying time period for event information, and erases a display of the event information when a predetermined time period elapses.
(3) In the portable terminal device (1) or (2) described above, the display of the event information is normally displayed in a simplified event displaying mode in which only an outline of the event is displayed.
(4) In the portable terminal device (3) described above, the display of the event information in the simplified event displaying mode is displayed by scrolling contents of the event information.
(5) The portable terminal devices (1), (2), (3) or (4) described above include form detecting means for detecting a form of the portable terminal device, and changes into a detailed event displaying mode for displaying details of the event, when the form detecting means detects form change while the event information is displayed.
(7) In the portable terminal device (6), a display in the simplified event informing mode disappears when a predetermined time period elapses.
(8) In the portable terminal devices (6) or (7), the display in the simplified event informing mode is displayed by scrolling the event on the selected area.
(10) In the method for informing of the event of the portable terminal device (9), simplified event information is displayed for a predetermined time period, and disappears after the predetermined time period elapses.
(11) The method for informing of the event of the portable terminal device (9) further includes a displaying time period setting step in which the user optionally sets a displaying time period for simplified event information.

This application is based upon and claims the benefit of priority from Japanese patent application No. 2007-275936, filed on October, 24, 2007, the disclosure of which is incorporated herein in its entirety by reference.

### BRIEF DESCRIPTION OF DRAWINGS

FIG. 1 is a block diagram illustrating a configuration of a desirable embodiment of a portable terminal device according to the invention.
FIG. 2 illustrates change condition of a chassis of the portable terminal device shown in FIG. 1. FIG. 2(A) illustrates a "close" state, and FIG. 2(B) illustrates an "open" state.
FIG. 3 is an explanatory diagram for an event informing mode of the portable terminal device of the embodiment. FIG. 3(A) illustrates a simplified event informing mode, and FIG. 3 (B) illustrates a detailed event informing mode.
FIG. 4 is a flowchart showing operations of the portable terminal device of the embodiment.
FIG. 5 is a flowchart showing operations in the simplified event informing mode of the portable terminal device of the embodiment.

### EXPLANATON OF REFERENCE

10 PORTABLE TERMINAL DEVICE
12 CPU
14 COMMUNICATION UNIT
16 DISPLAY UNIT
18 HINGE UNIT SENSOR
20 FIRST PART
22 KEYBOARD UNIT
30 SECOND PART
32, 34 DISPLAY UNIT

## Claims

1. A portable terminal device for informing a user by displaying event information on a display screen of a display unit, when an event to be informed occurs during a user's operation, the device comprising,
event display means for displaying the event information on a selected area on the display screen of the display unit where the user's operation is not disturbed.

2. The portable terminal device according to claim1, further comprising,
measurement means for measuring a displaying time period for the event information, wherein a display of the event information disappears when a predetermined time period elapses.

3. The portable terminal device according to claim 1 or 2, wherein the display of the event information is normally displayed in a simplified event displaying mode in which only an outline of the event is displayed.

4. The portable terminal device according to claim 3, wherein the display of the event information in the simplified event displaying mode is displayed by scrolling contents of the event information.

5. The portable terminal device according to any one of claims 1 to 4, further comprising:
form detecting means for detecting a form of the portable terminal device, wherein a detailed event displaying mode for displaying details of the event is set, when form change is detected by the form detecting means while the event information is displayed.

6. A portable terminal device for informing a user by displaying event information on a display screen of a display unit, when an event to be informed occurs during a user's operation, the device comprising:
display means for displaying an outline of the event on a selected area of the display screen where the user's operation on the display unit is not disturbed, in a simplified event informing mode; and
display means for displaying details of the event in a detailed event informing mode, when form change of the portable terminal device is detected while the event information is displayed in the simplified event informing mode.

7. The portable terminal device according to claim 6, wherein the display in the simplified event informing mode disappears when a predetermined time period elapses.

8. The portable terminal device according to claim 6 or 7, wherein the display in the simplified event informing mode is displayed by scrolling the event on the selected area.

9. A method for informing of an event of a portable terminal device for informing a user by displaying event information on a display screen of a display unit, when the event to be informed occurs during a user's operation, the method comprising:
a display area selecting step of preliminarily selecting a display area in a display screen, where the user's operation is not disturbed, of the display unit for displaying the event information;
a simplified event informing step of displaying the event information on the selected display area in a simplified event informing mode, when the event occurs;
a form change detecting step of detecting form change of the portable terminal device while the event information is displayed in the simplified event informing mode; and
a displaying mode changing step of changing into a detailed event informing mode for informing of details of the event when the form change of the portable terminal device is detected in the form change detecting step.

10. The method for informing of the event of the portable terminal device according to claim 9, wherein the simplified event information is displayed for a predetermined time period, and disappears after the predetermined time period elapses.

11. The method for informing of the event of the portable terminal device according to claim 9, further comprising:
a displaying time period setting step in which the user optionally sets a displaying time period for simplified event information.
